(19) Europäisches Patentamt
European Patent Office
Office européen des brevets

(11) Publication number: **0 142 113**
**A2**

# (12) EUROPEAN PATENT APPLICATION

(21) Application number: 84113334.1

(22) Date of filing: 06.11.84

(51) Int. Cl.[4]: H 01 M 4/58
C 01 B 31/00

(30) Priority: 07.11.83 JP 209635/83
16.07.84 JP 148413/84
16.07.84 JP 148414/84

(43) Date of publication of application:
22.05.85 Bulletin 85/21

(84) Designated Contracting States:
DE FR GB

(71) Applicant: Daikin Kogyo Co., Ltd.
Shinhankyu Building No 1-12-39, Umeda Kita-ku
Osaka-shi Osaka-fu(JP)

(72) Inventor: Maeda, Tadayuki
21-21, Hitotsuya 2-chome
Settsu-shi Osaka-fu(JP)

(72) Inventor: Koyama, Satoshi
11-32-503, Zuiko 4-chome
Higashiyodogawa-ku Osaka-shi(JP)

(72) Inventor: Okamura, Kazuo
1-34, Nakanokita 1-chome
Itami-shi Hyogo-ken(JP)

(74) Representative: Türk, Dietmar, Dr. rer. nat. et al,
Redies, Redies, Türk & Gille Patentanwälte
Brucknerstrasse 20
D-4000 Düsseldorf 13(DE)

## (54) Active material for batteries.

(57) An active material for batteries comprising a fluorinated carbon obtained by reacting a carbon black having a specific surface area of not less than 100 m²/g. The active material is excellent in discharge characteristics, particularly in flatness of discharge voltage, in height of discharge voltage and in discharge level at initial stage.

Fig.1

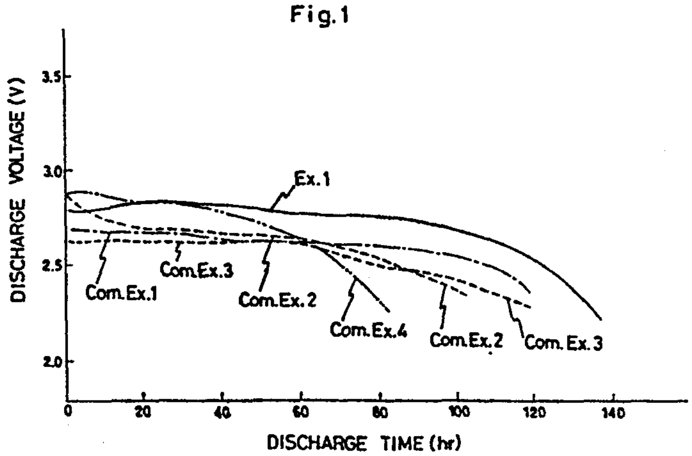


EP 0 142 113 A2

Croydon Printing Company Ltd.

ACTIVE MATERIAL FOR BATTERIES

The present invention relates to an active material for batteries comprising a particular fluorinated carbon obtained by reacting a carbon black having a specific surface area of not less than 100 $m^2/g$ with fluorine and which has excellent discharge characteristics, in particular high discharge voltage.

Since the discovery that a fluorinated carbon has favorable discharge characteristics as an active material for batteries, a number of studies have been made in an attempt to attain higher discharge voltage and longer discharge time or longer life.

In those studies, investigations from the viewpoint of starting carbon materials have also been made and the results obtained teach the fact that a fluorinated carbon obtained by reacting a carbon material having a small specific surface area with fluorine is favorable in flatness of discharge voltage but has defects that the discharge voltage drops at the initial stage of discharge and that the discharge voltage itself is not very high. There also teaches that a fluorinated carbon obtained by reacting a carbon material having a large specific surface area, such as active carbon, with fluorine does not cause the discharge voltage fall at the initial stage of discharge and has a high discharge voltage, but are short in discharge time and is inferior in flatness of discharge voltage (Japanese Unexamined Patent Publication (Tokkyo Kokai) No. 140972/1983).

The present inventors further investigated a carbon material having a relatively large specific surface area as a starting material for the production of fluorinated carbon and found that, among such materials, a carbon black having a specific surface area of not less than 100 $m^2/g$ gives a fluorinated carbon capable of providing a much higher voltage as compared with the conventional fluorinated carbons.

According to the present invention there is provided an active material for batteries comprising a fluorinated carbon obtained by reacting a carbon black having a specific surface area of not less than 100 $m^2/g$ with fluorine.

Figs. 1 to 3 are graphs showing discharge characteristics, namely changes in terminal voltage with the lapse of time, of batteries using active materials obtained in Examples according to the present invenion or active materials obtained in Comparative Examples.

The starting material used in the present invention must be a particular carbon black having a specific surface area of not less than 100 $m^2/g$, preferably not less than 500 $m^2/g$. A carbon material having a specific surface area of less than 100 $m^2/g$, even when it is carbon black, can only give a fluorinated carbon incapable of providing high discharge voltage. Also a carbon material other than a carbon black, even when it has a specific surface area of not less than 100 $m^2/g$, for instance in case of an activated carbon, can only give a fluorinated carbon inferior in flatness of discharge voltage level, in height of discharge voltage and in discharge time. The upper limit of the specific surface area of the carbon black is not particularly restricted, but is in general about 1300 $m^2/g$.

Typical examples of such carbon black are, for instance, a furnace black, and the like. Particularly, a furnace black having a specific surface area of not less than 500 $m^2/g$ is so called "condactive furnace black". However, a channel black is not preferred in general because it contains much impurities.

Further, the starting carbon black preferably has a dibutyl phtharate absorption value (hereinafter

0142113

referred to as "DBP absorption value") of not less than 110 ml/100 g (determined according to the method of ASTM D 2414-65T), particularly not less than 150 ml/100 g. When a carbon black having a DBP absorption value of less than 110 ml/100 g is used as a starting carbon material, a fluorinated carbon obtained tends to decrease in initial discharge voltage and in height of discharge voltage. The upper limit of the DBP absorption value is not particularly restricted, but is in general about 500 ml/100 g. Typical examples of the carbon black having such DBP absorption value are, for instance, a conductive furnace black, and the like.

The active material for batteries according to the present invention is prepared by reacting such a carbon black with fluorine gas.

The fluorine gas may be a pure fluorine gas or a mixed gas of fluorine gas and a diluent gas. In using such a mixed gas, the fluorine concentration is adjusted to a level not lower than 0.1 % by volume, preferably 1 to 50 % by volume. In the present invention, the use of a mixed gas is preferable since the use of a mixed gas allows broad-range adjustment of reaction conditions, and moreover has advantages, from the viewpoint of apparatus maintenance, for exmaple, that the wear of the production apparatus can be decreased and that the production apparatus can be simplified. The diluent gas may be any of gases which do not react with fluorine and carbon, such as nitrogen gas, perfluorocarbon gas and rare gas.

The reaction between a carbon black and a fluorine gas (inclusive of a mixed gas, hereinafter the same) is carried out, for example, by introducing the fluorine gas into a reactor charged with the carbon black at room temperature, gradually raising the temperature to a given reaction temperature, namely a temperature within the range of 180 to 550°C, preferably 200 to 500°C, most preferably 250 to 450°C, and maintaining the reaction temperature. It is also possible to previously heat the starting carbon black to the reaction temperature, and then introduce the fluorine gas while maintaining the temperature.

It is preferred to subject the starting carbon material to degassing at the reaction temperature to remove moisture prior to the reaction.

The active material for batteries obtained by the above reaction in accordance with the present invention has a fluorine content of 50 to 70 % by weight, preferably 52 to 68 % by weight.

An electrode composition is obtained by admixing the active material for batteries of the invention with a binder and an electrically conductive material. Usually, the binder is used in an amount of 10 to 40 parts by weight, and the conductive material is used in an amount of 5 to 20 parts by weight, respectively based on 100 parts by weight of the active material. The composition can be easily molded into a desired form suitable as electrodes for batteries or cells.

The binder includes, for instance, polytetrafluoroethylene (PTFE), and the conductive material includes, for instance, a highly conductive carbon black such as acetylene black or Ketchen black, and natural graphite.

Batteries or cells can be fabricated in known manners by using the active material of the invention. It is preferable to use the active material as a positive electrode and a metal such as lithium, mangesium, calcium or aluminum or an alloy based thereon as a negative electrode. The electrolyte is generally a non-aqueous electrolyte, though depending on the type of negative electrode.

The present invention is more specifically described and explained by menas of the following Examples, in which all parts and % are by weight unless otherwise noted. It is to be understood that the present invention is not limited to the Examples, and various changes and modifications may be made in the invention without departing from the spirit and scope thereof.

Example 1

A reactor was charged with 10.0 g of a conductive furnace black (specific surface area 950 $m^2/g$; DBP absorption value 350 ml/100 g; average particle size 0.03 μm) and degassed to remove moisture at 200°C for 30 minues, followed by cooling to room temperature.

After filling the reactor with nitrogen gas, the temperature in the reactor was raised to 200°C and maintained, and then fluorine gas was gradually introduced into the reactor at atmospheric pressure to adjust the fluorine concentration to 3 % by volume. Subsequently, a fluorine gas (fluorine concentration 3 % by volume) was introduced into the reactor, and the temperature was raised to 350°C at a rate of 20°C/hr while flowing the fluorine gas, and the reaction was conducted at that temperature for 12 hours. The reaction product was a pale gray powder. The fluorine content was 63.0 %.

Then, 10 parts of the above product was milled well with 3 parts of PTFE and 1 part of acetylene black, and the mixture was pessed on a nickel screen to form a positive electrode having an apparent surface area of 1.57 $cm^2$. A plate having a surface area of 1 $cm^2$ and a thickness of 1 mm cut out of a lithium block was supported on a nickel screen to form a negative electrode, and a 1 mole/liter solution of lithium borofluoride in γ-butyrolactone was used as an electrolyte. The discharge voltage of the obtained battery was measured at 25°C using a fixed resistance of 10 kiloohms. The change in terminal voltage with the lapse of time is shown in Fig. 1.

Comparative Example 1

A reactor was charged with 10.0 g of a petroleum coke (specfic surface area 8.6 $m^2/g$; average particle size 10 μm) and degassed to remove moisture at

400$^{o}$C for 30 minutes. After introducing a fluorine gas, the reaction was carried out at 400$^{o}$C for 4.5 hrs under a stream of a fluorine gas (fluorine concentration 10 % by volume) to give a white powder. The fluorine content was 62.0 %.

Using the above fluorinated graphite, a battery was fabricated in the same manner as in Example 1 and the terminal voltage was measure with the lapse of time. The result is shown in Figs. 1, 2 and 3.

Comparative Example 2

The fluorination was conducted in the same manner as in Comparative Example 1 except that an active carbon (specific surface area 807 $m^2/g$; average particle size 149 μm) was used as a starting carbon material and the reaction was carried out at 290$^{o}$C for 18 hrs under a stream of a fluorine gas (fluorine concentration 4 % by volume) to give a pale gray powder. The fluorine content was 64.2 %.

Using the above product, a battery was fabricated in the same manner as in Example 1 and the terminal voltage was measured with the lapse of time. The result is shown in Fig. 1.

Comparative Example 3

A reactor was charged with 10.0 g of a furnace black (specific surface area 84 $m^2/g$; DBP absorption value 100 ml/100 g; average particle size 0.03 μm) and degassed to remove moisture at 330$^{o}$C for 30 minutes, followed by cooling to room temperature.

After the temperature was raised to 330$^{o}$C, the fluorination was conducted for 8 hrs under a stream of a fluorine gas (fluorine concentration 1 % by volume), and subsequently for 21 hurs under a fluorine gas (fluorine concentration 4 % by volume) to give a pale gray powder. The fluorine content was 63.8 %.

Using the above product, a battery was fabricated in the same manner as in Example 1 and the terminal voltage was measured with the lapse of time. The result is shown in Figs. 1, 2 and 3.

Comparative Example 4

A reactor was charged with 10.0 g of an artificial graphite (specific surface area 5.0 $m^2/g$; average particle size 10 μm) and degassed to remove moisture at 380°C for 30 minutes, followed by cooling to room temperature.

A fluorine gas (fluorine content 90 %) at an atmospheric pressure was introduced into the reactor, and the temperature was raised to 380°C, and then the fluorination was conducted for 15.5 hrs to give a blackish brown powder. The fluorine content was 51.6 %. X-ray powder diffraction analysis of this powder revealed the occurrence of a peak at 10.50° (2  ) indicating diffraction on the (001) face. This result shows that the main component of the product was $C_2F$.

Using the above product, a battery was fabricated in the same manner as in Example 1 and the terminal voltage was measured with the lapse of time. The result is shown in Figs. 1 and 2.

Example 2

A reactor was charged with 5.0 g of a furnace black (specific surface area 325 $m^2/g$; DBP absorption value 125 ml/100 g; average particle size 0.017 μm) and degassed to remove moisture at 200°C for 30 minutes. Then, while maintaining the temperature at 200°C, a fluorine gas was gradually introduced into the reactor at atmospheric pressure to adjust the fluorine concentration to 2 % by volume. Subsequently, the fluorinaton was conducted for 1 hr under a stream of a fluorine gas (fluorine concentration 2 % by volume). Then, the fluorine concentration in the gas stream was raised to 5 % by volume and the reaction was continued for 1 hr and, finally, the temperature was raised to 375°C and the reaction was conducted for further 1 hr to give a gray powder. The fluorine content was 53.5 %.

Using the product, a battery was fabricated in the same manner as in Example 1 and the terminal voltage was measured with the lapse of time. The result is shown in Fig. 2.

Example 3

A furnace black (specific surface area 110 $m^2/g$; DBP absorption value 175 ml/100 g; average particle size 0.023 μm) was fluorinated in the same manner as in Example 1 to give a pale gray powder. The fluorine content was 56.1 %.

Using the product, a battery was fabricated in the same manner as in Example 1 and the terminal voltage was measured with the lapse of time. The result is shown in Fig. 2.

Example 4

A reactor was charged with 5.0 g of a furnace black (specific surface area 950 $m^2/g$; DBP absorption value 350 ml/100 g; average particle size 0.03 μm) and degassed to remove moisture at 200°C for 30 minutes. Then, while maintaining the temperature at 200°C, a fluorine gas was gradually introduced into the reactor at atmospheric pressure to adjust the fluorine concentration to 2 % by volume. Subsequently, the fluorinaton was conducted for 1 hr under a stream of a fluorine gas (fluorine concentration 2 % by volume). Then, the fluorine concentration in the gas stream was raised to 5 % by volume and the reaction was continued for 1 hr and, finally, the temperature was raised to 375°C and the reaction was conducted for further 1 hr to give a gray powder. The fluorine content was 59.5 %.

Using the product, a battery was fabricated in the same manner as in Example 1 and the terminal voltage was measured with the lapse of time. The result is shown in Fig. 3.

Example 5

A furnace black (specific surface area 1270 $m^2/g$; DBP absorption value 480 ml/100 g; average particle size 0.03 μm) was fluorinated in the same manner as in Example 4 except that a fluorine gas (fluorine concentration 10 % by volume) was introduced at the time when the temperature was raised to 375°C to give a white powder. The fluorine content was 67.8 %.

Using the above product, a battery was fabricated in the same manner as in Example 1 and the terminal voltage was measured with the lapse of time. The result is shown in Fig. 3.

Example 6

A furnace black (specific surface area 250 $m^2/g$; DBP absorption value 170 ml/100 g; average particle size 0.024 μm) was fluorinated in the same manner as in Example 4 to give a pale grayish powder. The fluorine content was 53.3 %.

Using the product, a battery was fabricated in the same manner as in Example 1 and the terminal voltage was measured with the lapse of time. The result is shown in Fig. 3.

As is clear from Figs. 1 to 3, in case of the active material (Comparative Example 1) obtained from the petroleum coke, though the flatness of discharge voltage and the discharge time are good, the discharge voltage is low. In case of the active material (Comparative Example 2) obtained from the active carbon having a large specific surface area (807 $m^2/g$), though the initial discharge voltage is high, the discharge voltage drastically decreases and the discharge time is short. Further, the active material (Comparative Example 3) obtained from the carbon black having a smaller specific surface area is inferior in height of discharge voltage, in discharge level at initial stage and in discharge time. Also, in case of the active material (Comparative Example 4) obtained from the artificial graphite, though the discharge voltage is relatively high, the discharge time is short.

On the other hand, the active materials of the present invention are excellent in height of discharge voltage, in flatness of discharge voltage, in discharge level at initial stage and in discharge time.

WHAT WE CLAIM IS:

1. An active material for batteries comprising a fluorinated carbon obtained by reacting a carbon black having a specific surface area of not less than 100 $m^2/g$ with fluorine.

2. The active material for batteries of Claim 1, wherein the specific surface area of the carbon black is not less than 500 $m^2/g$.

3. The active material for batteries of Claim 1, wherein the carbon black has a dibutyl phtharate absorption value determined according to the method of ASTM D 2414-65T of not less than 110 ml/100 g.

4. The active material for batteries of Claim 1, wherein the dibutyl phtharate absorption value of the carbon black is not less than 150 ml/g.

5. The active material for batteries of Claim 1, wherein the carbon black is a furnace black.

6. The active material for batteries of Claim 1, wherein the carbon black is a conductive furnace black.

Fig. 1

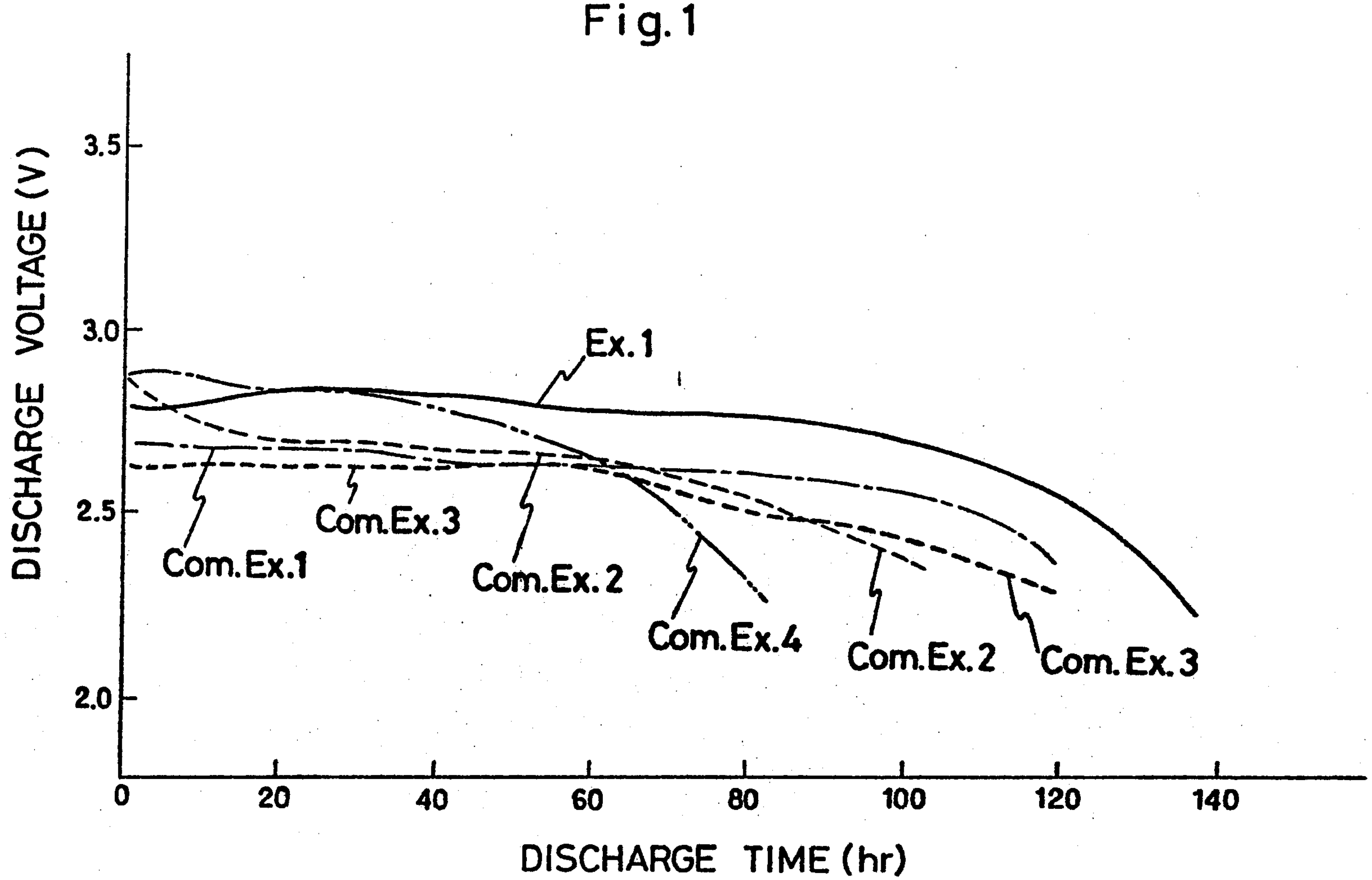

DISCHARGE VOLTAGE (V)
3.5
3.0
2.5
2.0
0
20
40
60
80
100
120
140
DISCHARGE TIME (hr)
Ex. 1
Com.Ex.1
Com.Ex.3
Com.Ex. 2
Com.Ex.4
Com.Ex. 2
Com.Ex. 3

0142113

Fig.2

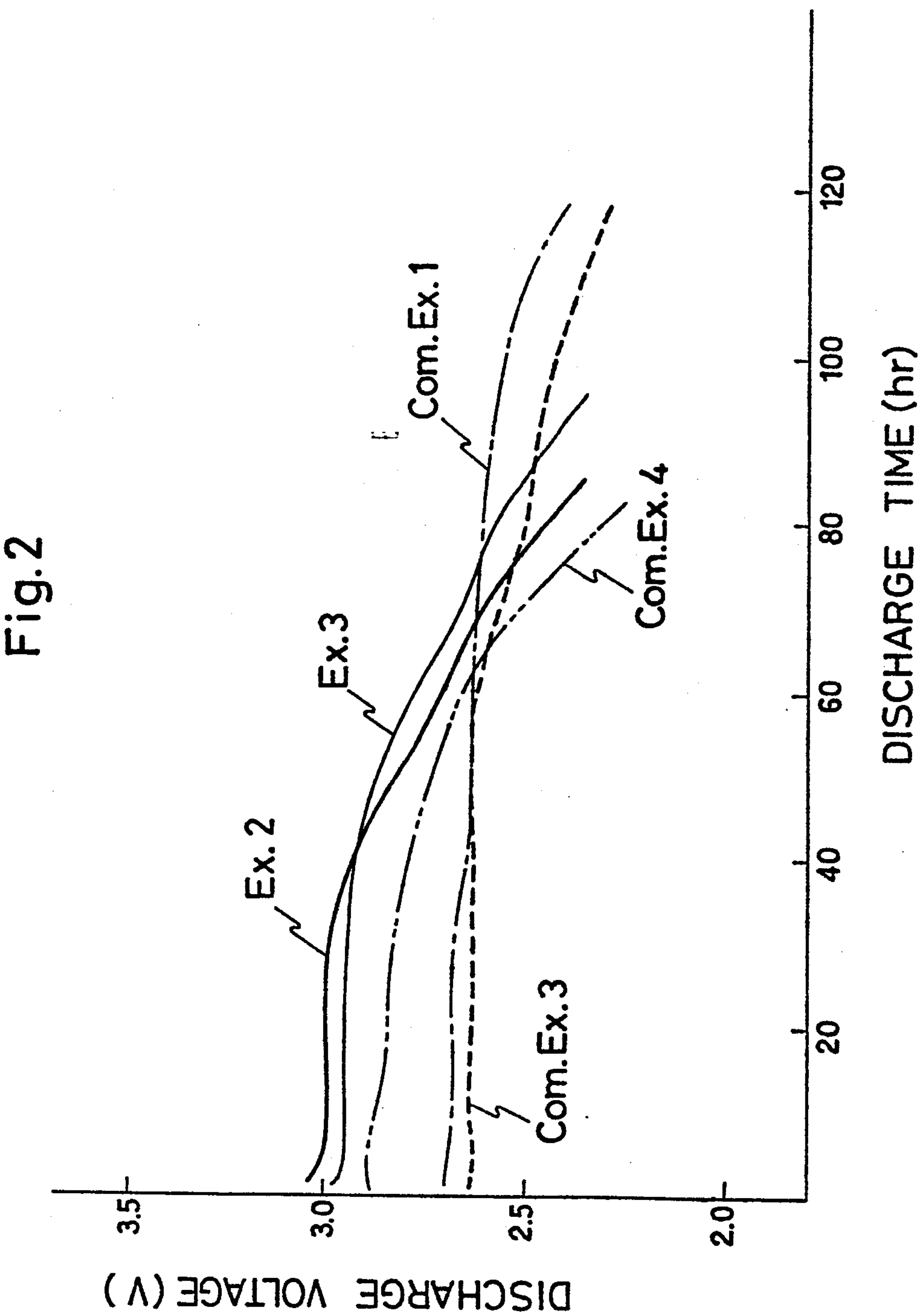

Fig. 3

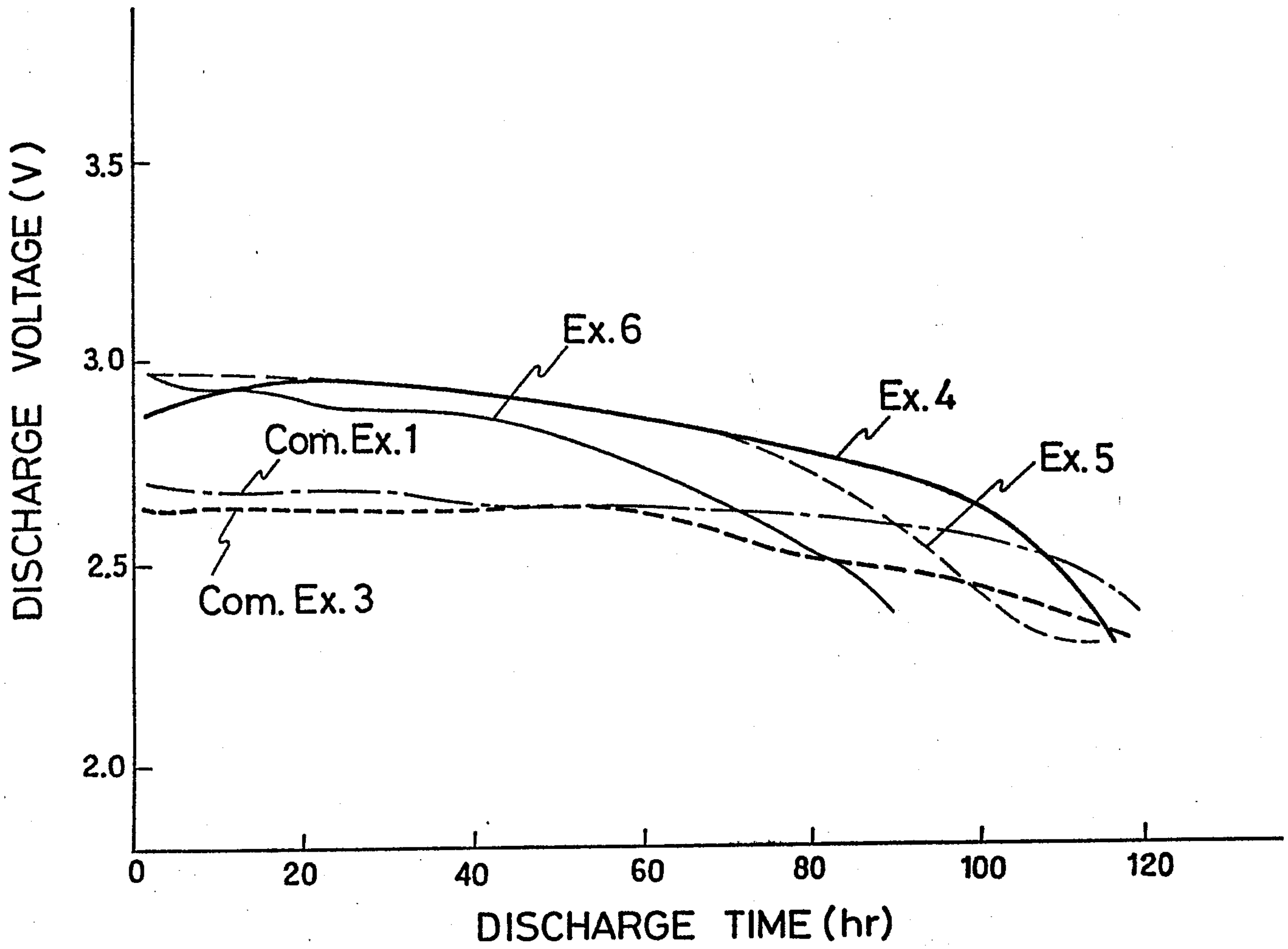
DISCHARGE VOLTAGE (V)
3.5
3.0
2.5
2.0
0
20
40
60
80
100
120
DISCHARGE TIME (hr)
Ex. 6
Ex. 4
Ex. 5
Com. Ex. 1
Com. Ex. 3